# EUROPEAN PATENT APPLICATION

(11) **EP 2 019 435 A2**
(43) Date of publication of application: **28.01.2009**
(21) Application number: 08160619.6
(22) Date of filing: 17.07.2008
(51) Int. Cl.: H01L 31/042

(54) **Solar cell module**

(30) Priority: 23.07.2007 JP 2007191236
(71) Applicant: KANEKA CORPORATION, Osaka-shi, Osaka 530-8288 (JP)
(72) Inventor: Nakajima, Takeharu, Osaka-shi Osaka 530-8288 (JP); Kondo, Masataka, Osaka-shi Osaka 530-8288 (JP)
(74) Representative: Vossius & Partner

(57) **Abstract**

A solar cell module (1) comprising:
a solar cell panel (2) made up of solar cell elements formed on a substrate, the panel (2) having a front face to be exposed to solar light and a back face opposed to the front face;
a frame (3) extending around an entire periphery of the panel (2) for supporting the panel (2) at its periphery;
at least one rib (4) spanning a space defined by the frame (3), the rib (4) being detachably attached to the frame (3), so that an upper face of the rib (4) supports the solar cell panel (2) at the back face; and
an elastic spacer (7) sandwiched between the upper face of the rib (4) and the back face of the panel (2), the elastic spacer (7) being in a face-to-face contact with the back face of the panel (2).

## Description

The present invention relates to a solar cell module for use in photovoltaic generation, especially a large area solar cell module.

In recent years, the technologies for the realization and the cost reduction of photovoltaic system have been developed. Especially thin-film solar cells are promising candidates for low cost solar cells, because thin-film solar cells need fewer raw materials than those of single crystalline solar cells or poly-crystalline solar cells and so on to make them, and thin-film solar cells can be made directly on the large area substrate and integrated monolithically on the substrate.
As examples of thin film solar cells, there are thin film polycrystalline silicon solar cells, amorphous silicon solar cells, compound semiconductor solar cells (CdS, CdTe and CIGS). Though amorphous silicon solar cells are most practically used within the group, there is the problem of photo-degradation in which the solar cell is degraded by the elongated irradiation of solar light during the long term out-door use.

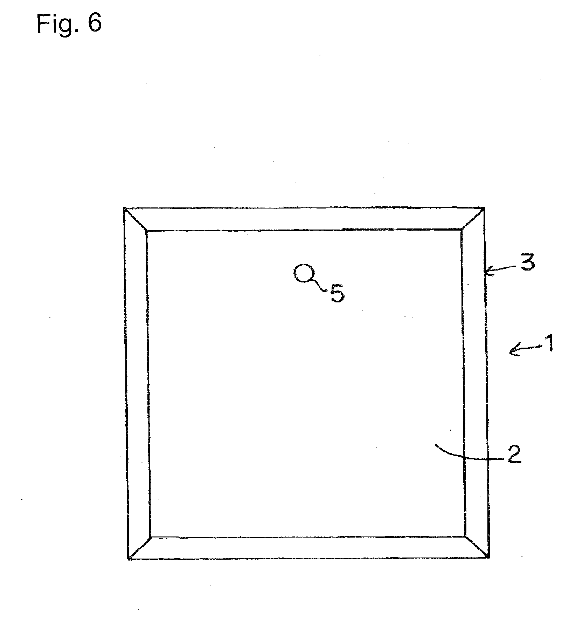

In recent years, amorphous silicon solar cells which maintain around 10% conversion efficiency of light into electricity after above-said photo degradation have been developed. This accelerates the utilization of amorphous silicon solar cells to the photovoltaic power use, such as the supply of home electricity by the solar cell which is set on the rooftop of the house.
These solar cells are utilized in the form of a solar cell panel which has enough strength and weatherability for that purpose, not in the form of single devices.
The solar cell panel 2 is supported by the surrounding frame 3 and thus a solar cell module 1 is formed.
As shown in Fig. 6, a conventional solar cell module 1 consists of a solar cell panel 2, a frame 3 which supports the solar cell panel 2 and a terminal box 5 to supply electricity which is converted from light within the solar cell panel. The frame 3 is also used to protect the solar cell panel from external mechanical stress and to fix the solar cell module to a certain place like a rooftop. As material for the frame, aluminum alloy or resin is usually used.

Though aluminum alloy which is used for the frame 3 of conventional large area solar cell modules has higher weatherability and lighter weight than that of other materials like iron, it is more expensive than the other materials therefore it drives up the costs of solar cell modules when the size of solar cell module becomes larger. In the case of a resin frame, the situation is almost the same, because more resin must be used to obtain mechanical strength to support a larger area solar cell panel.

A large area solar cell module has the advantage of simpler cable setting and larger active area for the system. On the other hand a larger area solar cell module needs more frame thickness and more material for constituent parts and sometimes needs special lighter and stronger material like tempered glass in order to obtain the necessary mechanical strength. Therefore, utilization of larger modules tends to need more material thus more weight and cost, as compared with utilization of a plurality of small modules. Moreover, in the case of modules whose structural materials are used in the light entrance face, there is a need for thicker transparent material like thicker glass for the larger area solar cell module, but such thicker transparent material absorbs more light and therefore results in less irradiation to the solar cell elements and lowered photo-electric conversion efficiency.

Recently, some countries have made laws stating that a solar cell module of higher strength specification should be used when the solar cell module is installed in the mountainous area.
This type of solar cell modules has higher strength against the stress from the light entrance face, in order to sustain the weight of accumulated snow. Ordinary (conventional) solar cell modules can sustain the stress of 2400 Pa in the vertical direction. Solar cell modules of higher strength specification must sustain more stress of 5400Pa in the vertical direction in addition to ordinary specification.

In order to solve the problem, JP9-148612A and JP10-294485A each disclose a solar cell module that has a single solar cell panel and a frame which surrounds and supports the solar cell panel and at least one rib which is fixed to the inward portion of said surrounding frame.

According to JP9-148612A, so as to fix a rib, at least one threaded hole is formed at a portion of a frame at which the rib is to be fixed to the frame, and both ends of the rib are fixed to the frame with screws. Further, the rib is fixed to the solar cell panel with adhesive.

And according to JP10-294485A, a frame surrounds and is fixed to a solar cell panel, a rib is arranged in the space surrounded by the frame and fixed to an inner flange of the frame, the solar cell panel is supported by the rib and, similar to above, the rib is fixed to the solar cell panel with adhesive.

According to JP2004-165556A, a barrel-shaped elastic body is fixed to the rib. The rib can be slightly moved relative to a solar cell panel when supporting the back of a solar cell panel.

When the rib is made of the materials of high thermal conductivity like aluminum and if the rib directly touches a solar cell panel, there would be a thermal gradient within the glass of solar cell panel and the glass might be broken by the stress resulting from the differences of thermal expansion in the parts of the glass. Therefore, a design in which the rib does not directly touch the panel is indispensable.

For the purpose of above design, in the former art, adhesive is used. But utilization of the adhesive, like tape adhesive, induces a problem that does not allow disassembly and reassembly without breaking the solar cell module parts. This problem is also can be said in the case of repair.
And moreover in the case of JP9-148612A, the ribs are mechanically supported only by the screws that is not strong enough to sustain the stress of 5400 Pa.

Moreover, adhesives can be deformed upon stress, and sometimes the rib touches the solar cell panel, resulting in the problems of the glass breakage due to the thermal gradients.

And in the case of art described in JP2004-165556A, barrel-shaped elastic body pushes the solar cell panel in local parts in case the elastic body is hard; furthermore, there are problems of concentrated stress to the small points which induces glass breakage, and when the elastic body is soft, large deformation is expected and also the rib directly touches the solar cell panel.

Therefore, it is an object of the present invention to provide a solar cell module that solves the above problems, that withstands stress on the light entrance face, for example, caused by weight of snow, that can be easily assembled, that has a stable function, or that is of low cost. This object is achieved with the features of the claims.

According to the invention, the elastic spacer and the solar cell panel can be fixed without using adhesive and can sustain the downward stress on the glass of the solar cell.

Herein it is preferable that the elastic spacer is engaged with the rib to be movable relative to each other by combination of a protrusion on the elastic spacer and a recess of the rib.

Preferably, the width of the rib on the direction perpendicular to the longitudinal direction of the said rib preferably is the same size to that of elastic spacer. If the width of the elastic spacer is too narrow, there would be concentrated stress to the glass, so that the glass might break. If the width of the elastic spacer is too wide, the width of rib should be wide in accordance with the width of elastic spacer, and therefore the rib becomes costly.
Preferably, the width of the elastic spacer is more than 5 mm and less than 50 mm.

The length of the elastic spacer in the longitudinal direction of the rib is preferably slightly shorter than the length of the surface of the rib that faces to the solar cell panel. If the length of the elastic spacer is the same as the length of the surface of the rib that faces to the solar cell panel, the elastic body cannot be moved, and the stress induced by the slight displacement between the rib and the solar cell panel cannot be released by movement of the elastic spacer. If the elastic spacer is too short, concentrated stress is induced to some point of the solar cell panel. Therefore it is preferable that the elastic spacer is shorter than the surface of the rib that faces the solar cell panel by 2mm to 100mm.

In order that the solar cell panel does not directly touch the rib, the elastic spacer should not be deformed in the environment of higher temperature and should provide thermal insulation. For such properties, the elastic spacer preferably is a molded body of at least one resin selected from the group of vinyl chloride, fluorocarbon, EPDM, elastomer, polyethylene and polycarbonate or a molded body of rubber.

In order to allow an easy assembly of the solar cell module, the rib has the shape of a rectangular tube, and both ends of the rib are trimmed to reduce the thickness in the direction of the thickness of the solar cell module; the trimmed part of the rib mate with the inward flange of the frame, and the rib is set in a predetermined place by a screw which is placed between a hole in the frame and a threaded groove within the rib.

A frame extends around the substantially rectangular solar cell panel and the said rib is fixed to the opposing sides or corners of the said frame. More specifically, the ribs are fixed to the frame in the shape of a cross, a pair of parallel rods, or an X (crossed brace struts), in order to enhance mechanical strength of the solar cell module.

According to the invention, a large scale solar cell module with sufficient mechanical strength can be obtained without increasing the thickness of constituent parts, such as glass or transparent substrate, therefore a lighter and cost effective solar cell module can be obtained.
The thinner glass substrate according to the invention absorbs less near-infrared light, therefore the active layer of the solar cell can utilize such light so that a higher efficiency can be obtained with the solar cell module.
According to the invention, the rib or ribs can support the solar cell panel without using adhesive.

Therefore, difficulties of assembly of solar cell modules due to the usage of adhesive are solved.
In the case the constituent parts, such as the solar cell panels, ribs and frames, are made with insufficient accuracy in size, the solar cell module can be assembled without inducing adverse effect because the elastic spacer can slip and relieve stresses according to the present invention, while conventional art cannot.

Furthermore, the problems associated with a direct contact between the solar cell panel and the rib due to the thermal distortion of adhesive or due to incorrect assembly can be solved.

The elastic spacer does not come off but is movable to a certain extent; therefore the rib can be fixed to the predetermined position by two screws without using other fixing measures. Furthermore, an ordinary solar cell module can be modified to a high strength solar cell module not by a reassembling process, but by two additional holes on longitudinal frame parts and the well designed rib.
Gasket and edge encapsulation (adhesive) are used in a groove of the frame where a solar cell panel and a frame mates, therefore it has been difficult to reassemble the solar cell module, because edge encapsulation and other constituent member will be destroyed when the solar cell module has been disassembled. So additional materials to repair the solar cell module are needed when the module is reassembled.
According to the present invention, such reassembling process is not needed; therefore it is very easy to produce the solar modules of the present invention. Because the rib can be fixed and dismantled by two screws only, it is easy to modify ordinary solar cell modules into high strength solar cell modules according to the present invention; therefore the solar cell modules stocked in the warehouse of a dealer outside of the factory can be changed into high strength solar cell modules on site on demand; in other words, the production plan of the solar cell module according to the present invention can be very flexible.

Moreover, a high strength solar module of the present invention can be changed easily into an ordinary solar cell module by removing the screws and ribs.
The invention is further described with reference to the drawings:
Fig.1 is a perspective view showing a solar cell module according to a first embodiment of the present invention as seen from the back side;
Fig.2 is a sectional view showing a part of fixing a rib with a frame of a solar cell module according to the first embodiment of the present invention;
Fig.3 is a perspective view showing a rib and elastic spacer according to the embodiment of the present invention;
Fig.4 is a plan view showing a solar cell module according to a second embodiment of the present invention;
Fig.5 is a plan view showing a solar cell module according to a third embodiment of the present invention; and
Fig.6 is a plan view of a conventional solar cell module.

The solar cell module 1 of the first embodiment comprises a solar cell panel 2, a terminal box 5 through which electricity from the solar cell is outputted, a frame 3 which supports the outer edge of the solar cell panel, and ribs 4 which are removably fixed to the frame. An elastic spacer 7 is provided between the rib 4 and back surface of the solar cell panel, and the rib 4 is fixed to the frame 3 by screws 6. The rib 4 enhances the strength of the solar cell module by restricting the distortion of the solar cell module 1 and adding rigidity of the module. The elastic spacer 7 thermally insulates between the rib 4 and the solar cell panel 2 and alleviates mechanical shocks between them.

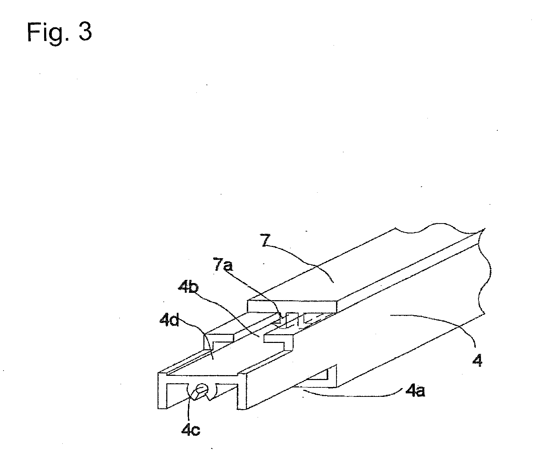

The rib is of a tubular shape having a substantially rectangular cross section, as shown in Fig.3, to enhance mechanical strength. Of course other cross-sectional shapes such as an H or I shape can be used to enhance the mechanical strength of the rib, but the rectangular tube structure is the more preferable sectional structure for the easiness of making and assembly. The elastic spacer 7 and the rib 4 mate by means of the protrusion 7a of the elastic spacer and a recess (or engaging portion) 4b of the rib 4. By utilizing this structure, the elastic spacer 7 can be attached easily without using adhesive. And the elastic spacer can move to some extent without coming off the rib, therefore a stress induced during an assembly process and usage can be relieved by this structure.

The frame used for conventional modules can be applied to the embodiments according to the present invention. In the embodiment, extruded frame components 3 which have grooves 3f to mate solar cell panel are assembled into a rectangle surrounding the solar cell panel 2. Herein, the grooves 3f need not contact directly with solar cell panel 2. For example, a thermal insulator can be inserted. According to the present invention, the frame member 3 may have a flange 3e protruding inwardly at the bottom of the frame member. More specifically, said frame member 3 has an inward flange (protrusion) 3e to mate with the bottom of the rib 4.
The inward flange 3e is provided with screw bolt holes (not illustrated in figure) in order to fix the solar cell module to some structures such as a stage.

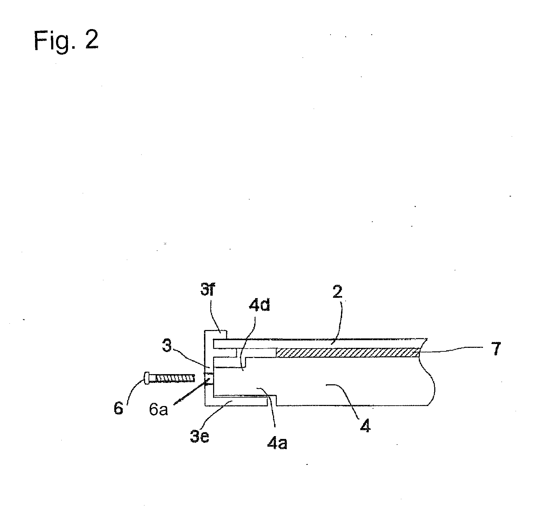

The trimmed part 4a of the rib 4 mates with the inward flange 3e of the frame 3, and pressure applied downwardly on the surface of the solar cell panel 2 is transmitted to the rib 4 through the elastic spacer 7, and is transmitted to the frame 2 via the contact of the trimmed part 4a of the rib 4 and the inward flange 3e.
Though the mechanical effects of the present invention are achieved with this structure, the rib 4 is not fixed to a predetermined position. Therefore, in order to fix the rib 4 to the predetermined position, two holes 6a are provided in the frame 3, two screws 6 are applied to the screw groove 4c (see Fig. 3; not illustrated in Fig. 2) and the screws are tightened. Another trimmed portion 4d of the rib 4 may be provided in order to avoid interference the with frame body 3.

According to the invention, the rib 4 supports the solar cell panel 2, and the frame 3 supports the rib, so that the stress on the glass plate in the solar panel is reduced; therefore, a thinner glass plate can be used in the case of the present invention. If the glass has become thicker to get more mechanical strength, optical absorbance of the glass especially in the wavelength range of near-infrared increases, accordingly such optical loss induce drop of efficiency of the solar cell module. Such problems of efficiency drop can be solved with thinner glass which is achieved by the structure of the module according to the present invention.

In the embodiments of the present invention, the solar cell panel 2 consists of a transparent substrate such as a glass plate, a photovoltaic device containing amorphous silicon, an adhesive filler, an encapsulating material that covers and protects a back surface, which are formed in this order from the light entrance face. Herein the examples of the adhesive fillers are EVA (ethylene vinyl acetate), PVR (polyvinyl butyral), polyisobutylene and silicone. And the examples of the encapsulating materials are, polyvinyl fluoride film, polyethylene terephthalate film and their composite film including aluminum foil as moisture barrier.

In the embodiment of the present invention, amorphous silicon solar cells and/or thin-film poly-silicon solar cells are preferably used. The production costs of such thin-film solar cells are lower than that of single crystalline silicon solar cells or bulk poly crystalline silicon solar cells, and such solar cells can be produced directly on the large insulating substrate as monolithically integrated form. If the area of the solar cell module becomes larger, installation cost can be dropped.
If the annealing effect of amorphous silicon solar cells is utilized by the usage of a thermal insulator, as described in JP7-297435A, the position of the thermal insulator can be designed more freely, because the structure of the present invention enhances the strength of the solar cell module, and, therefore, a higher annealing effect can be expected.

This invention can also be applied to other types of thin-film solar cells, such as CdTe/CdS solar cells or CIGS solar cells. These solar cells have a higher conversion efficiency and a smaller photo-degradation effect than that of amorphous silicon.
The present invention can also be applied to solar cell panels of any types if the solar cell panel has a planer structure, for example, crystalline silicon solar cells and flexible solar cells attached to a steel plate.

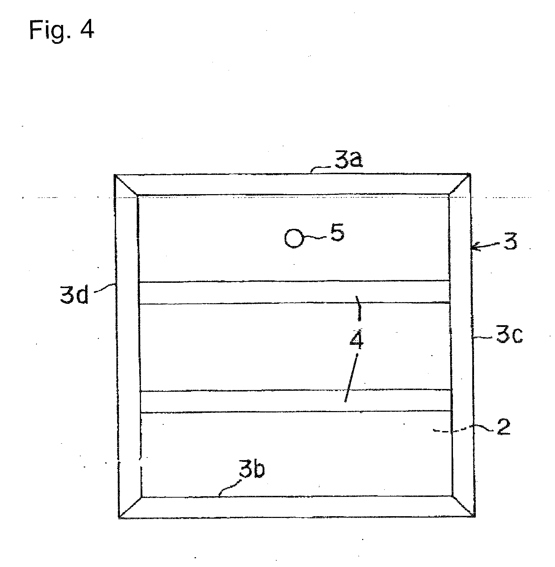

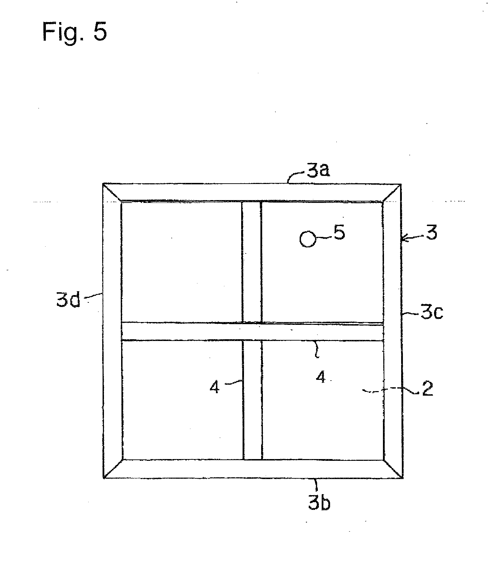

The invention is not restricted to the scope of the embodiments. For example, the material of the frame can be wood, steel, resin or metallic plate with resin film coating such as polyvinyl chloride, fluorocarbon or acrylic resin. The cross-sectional shape of the rib is not limited to a rectangular shape, but may be an I type shape, an H type shape, or even a circle or a triangle type as long as they have enough strength.

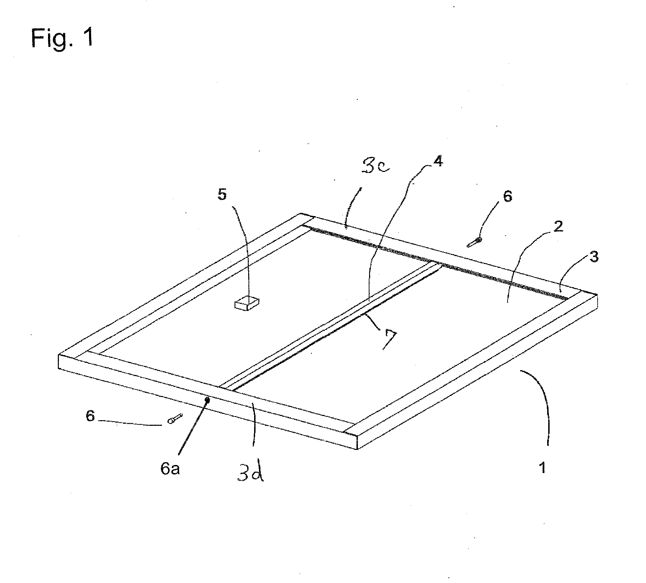

In Fig. 1, there is a single rib 4 fixed between the center positions of longitudinal frame components 3c and 3d.
A plurality of ribs can be employed and fixing positions can be designed like that shown in Fig 4 or Fig.5.
The design of the frame and ribs can also be changed to a "ladder" form (i.e., a pair of parallel ribs are spanned between a pair of frame components).
In Fig. 4, two ribs are fixed between positions of longitudinal frame components 3c and 3d, the positions equally dividing each of the longitudinal frame components.
In Fig. 5, one rib is fixed between the center positions of frame components 3c and 3d, and another rib is fixed between the center positions of longitudinal frame components 3a and 3b, these two ribs make a cross shape. The ribs may be fixed diagonally to the corners of the frames just like an X or a pair of crossed brace struts.
Any shape and materials can be applied as the embodiment of current invention, if the principle of the present invention is maintained.

## Claims

1. A solar cell module (1) comprising:
a solar cell panel (2) made up of solar cell elements formed on a substrate, the panel (2) having a front face to be exposed to solar light and a back face opposed to the front face;
a frame (3) extending around an entire periphery of the panel (2) for supporting the panel at its periphery;
at least one rib (4) spanning a space defined by the frame (3), the rib (4) being detachably attached to the frame, so that an upper face of the rib (4) supports the solar cell panel (2) at its back face; and
an elastic spacer (7) sandwiched between the upper face of the rib (4) and the back face of the panel (2), the elastic spacer (7) being in a face-to-face contact with the back face of the panel (2).

2. A solar cell module according to claim 1,
wherein the rib (4) has a longitudinal direction, and the elastic spacer (7) has a width perpendicular to the longitudinal direction of the rib (4) of more than 5 mm and less than 50 mm.

3. A solar cell module according to claim 1 or 2,
wherein the elastic spacer (7) is engaged with the rib (4) to be movable relative to each other by combination of a protrusion (7a) on the elastic spacer (7) and a recess (4b) or engaging portion of the rib (4).

4. A solar cell module according to one of claims 1 through 3,
wherein the elastic spacer (7) is a molded body of at least one resin selected from a group of vinyl chloride, fluorocarbon, EPDM, elastomer, polyethylene and polycarbonate or a molded body of rubber.

5. A solar cell module according to any one of claims 1 through 4,
wherein the frame (3) has a flange (3e) protruding inwardly to the space defined by the frame, and the flange (3e) can be mated with a lower part of the rib (4) opposite to the upper face supporting the solar cell panel (2);
the rib (4) has a rectangular tube shape;
the rib (4) has both longitudinal ends (4a) that are trimmed in the thickness direction to mate with the flange (3e);
the rib (4) has a protrusion inwardly of the rectangular tube to form a threaded groove (4c); and
the rib (4) is fixed to the frame (3) by a screw (6) through a hole (6a) drilled in the frame (3) and the threaded groove (4c).

6. A solar cell module according to any one of claims 1 through 5,
wherein the solar cell panel (2) has a substantially rectangular shape;
the frame (3) extends around the substantially rectangular panel; and the rib (4) is fixed to opposing sides or corners of the frame (3).

7. A solar cell module according to any one of claims 1 through 6,
wherein the ribs (4) are fixed to the frame in the shape of a cross, a pair of parallel rods, or an X or crossed brace struts.

8. A solar cell module according to any one of claims 1 through 7,
further comprising a terminal box (5) fixed to the back surface of the solar cell panel (2) on a portion where there is no rib (4).
